# EUROPÄISCHE PATENTSCHRIFT

(11) **EP 1 870 621 B1**
(45) Veröffentlichungstag und Bekanntmachung des Hinweises auf die Patenterteilung: **03.09.2008**
(21) Anmeldenummer: 07110635.5
(22) Anmeldetag: 20.06.2007
(51) Int. Cl.: F16K 31/06, F16K 11/044

(54) **Ventil zur Steuerung eines Fluids**
Valve for controlling fluids
Robinet de commande d'un liquide

(30) Priorität: 22.06.2006 AT 10552006
(43) Veröffentlichungstag der Anmeldung: 26.12.2007
(73) Patentinhaber: Hoerbiger Automatisierungstechnik Holding GmbH, 86972 Altenstadt (DE)
(72) Erfinder: Kurz, Manfred, 86972 Altenstadt (DE); Strobel, Georg, 93083 Obertraubling (DE); Spiegl Bernhard, 1030 Wien (AT)
(74) Vertreter: Pinter, Rudolf

(56) Entgegenhaltungen:
- GB-A- 2 250 801
- JP-A- 11 336 638
- US-A- 3 606 241
- US-A1- 2001 048 091

## Beschreibung

Die Erfindung betrifft ein Ventil zur Steuerung eines Fluids, mit einem elektromagnetischen, nach Art eines Topfmagneten aufgebauten, Aktuator sowie einer vom Aktuator betätigbaren Ankerplatte, welche ein mit einem Ventilsitz zusammenwirkendes Schließorgan aufweist und über einen Verbindungskanal im Schließorgan druckkompensiert ist, wobei der damit druckbeaufschlagte Spulenraum des Aktuators nach außen druckdicht ausgeführt ist.

Ventile mit einem elektromagnetischen, nach Art eines Topfmagneten aufgebauten, Aktuator sowie einer vom Aktuator betätigbaren Ankerplatte, welche ein mit einem Ventilsitz zusammenwirkendes Schließorgan aufweist, sind beispielsweise aus DE 44 19 446 A1, DE 103 40 941 A1 oder US 6,182,943 B3 bekannt, sowohl bei pneumatischen wie auch hydraulischen Anwendungen im Einsatz, und ermöglichen die Erzielung hoher Magnetkräfte zur Schaltung des Schließorgans bei gleichzeitig geringer Baugröße des Aktuators, womit bauraum- und leistungsoptimierte Magnetventile darstellbar sind.

Nachteilig ist bei den angeführten bekannten Ausführungen derartiger Ventile, dass sie für Hochdruckanwendungen und insbesonders für Hochdruck-Hydraulikanwendungen nur sehr eingeschränkt geeignet sind, da das relativ große, vom zum schaltenden Druck beaufschlagte Schließorgan (bzw. die im Falle der genannten DE 103 40 941 A1 damit unmittelbar verbundene Ankerplatte) dann sehr große Magnetkräfte zur Ventilbetätigung erfordern würde, die wiederum nur mit einer nachteiligen Vergrößerung des Bauraums bzw. Erhöhung des Gewichtes und der Leistungsaufnahme realisierbar wären.

Weiters bekannt ist beispielsweise aus DE 199 08 875 A1 ein Ventil der eingangs genannten Art, welches als Brennstoffeinspritzventil für Gasmotoren allerdings nur zur Steuerung relativ niederer Fluiddrücke geeignet ist.

Ein Ventil dieser Art ist auch aus der Druckschrift GB 2 250 801 A bereits bekannt.

Aufgabe der vorliegenden Erfindung ist es, ein Ventil der eingangs genannten Art so zu verbessern, dass die erwähnten Nachteile der bekannten Anordnungen vermieden werden, und dass insbesonders auch Anwendungen derartiger Ventile im Hochdruckbereich und insbesonders in der Hochdruckhydraulik möglich werden.

Diese Aufgabe wird gemäß der vorliegenden Erfindung bei einem Ventil der eingangs genannten Art dadurch gelöst, dass das den Spulenraum umgebende Magnetgehäuse auf der der Ankerplatte gegenüberliegenden Seite einstückig mit einem lediglich die druckdicht abgedichtete(n) Durchgangsöffnung(en) für die elektrischen Anschlüsse der Spule des Topfmagneten aufweisenden Deckel abgeschlossen ist. Damit kann nach wie vor auf einfache Weise unter Beibehaltung der Vorteile eines als Topfmagnet aufgebauten Aktuators mit sehr geringen Magnetkräften das Auslangen gefunden werden, da auf beiden Seiten des Schließorgans samt Ankerplatte im wesentlichen gleiche Druckverhältnisse vorliegen.

Der damit druckbeaufschlagte Spulenraum des Aktuators ist sehr einfach und wirkungsvoll dadurch abgedichtet, dass das Magnetgehäuse einstückig mit dem Deckel abgeschlossen ist, dessen Durchgangsöffnungen für die elektrischen Anschlüsse naturgemäß nur sehr klein sein müssen, womit auch die bei höheren Drucken wirkenden Kräfte nur sehr gering sind und leicht mit einfachen Dichtungen beherrscht werden können - vorzugsweise weist die/jede Durchgangsöffnung im Deckel einen Dichtring, vorzugsweise O-Ring, zur unmittelbaren Abdichtung der mittels eines Isolators gegen den Deckel isolierten Anschlüsse auf.

Abgesehen von der genannten Ausbildung könnten die Durchgangsöffnungen für die elektrischen Anschlüsse ohne weitere Nachteile aber auch seitlich herausgeführt und entsprechend abgedichtet sein.

In weiters bevorzugter Ausgestaltung der Erfindung ist vorgesehen, dass der die Spule des Topfmagneten tragende Polkern in Axialrichtung in eine zentrale Aufnahme im Deckel eingepresst ist, was auf einfache Weise einen beim Einpressen einstellbaren Ausgleich von Herstellungs- und Montagetoleranzen ermöglicht. Davon abgesehen könnte der Polkern aber auch einstückig mit dem Deckel oder sogar zusammen mit dem Deckel einstückig mit dem Magnetgehäuse ausgeführt sein, was eine kostengünstigere Herstellung erlaubt.

Um die Einstellbarkeit des Ventils bzw. die Kompensation von Herstellungs- und Montagetoleranzen weiter zu vereinfachen, ist gemäß einer weiteren bevorzugten Ausgestaltung der Erfindung vorgesehen, dass das Schließorgan in axialer Richtung in eine zentrale Öffnung der Ankerplatte eingepresst ist. Beide Maßnahmen können je für sich oder gemeinsam bedarfsweise angewendet werden.

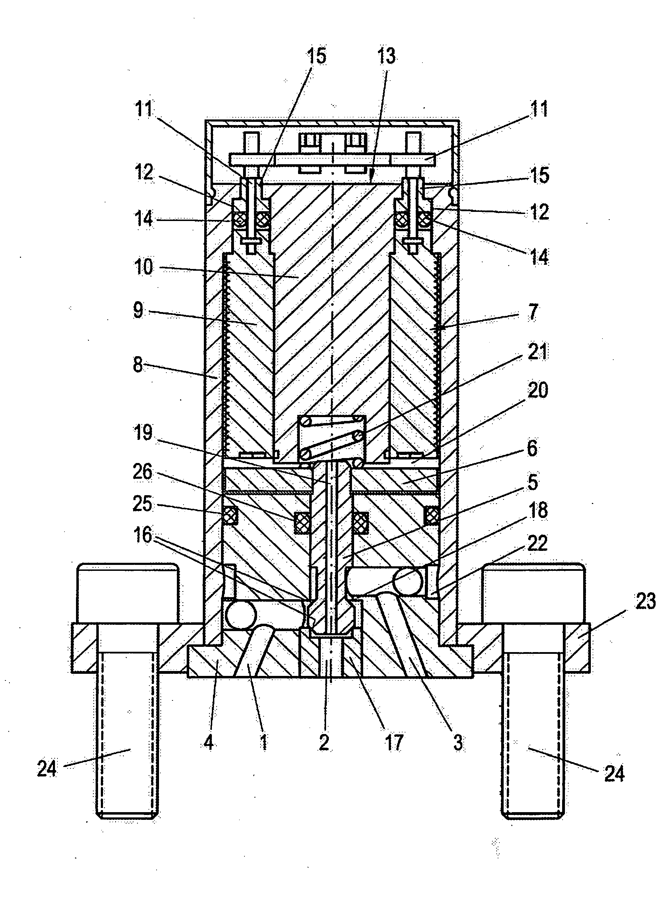

Die Erfindung wird im folgenden noch anhand des in der Zeichnung teilweise schematisch dargestellten Ausführungsbeispiels näher erläutert.

Das im schematischen Axialschnitt dargestellte erfindungsgemäße Ventil ist als 3/2-Wege-Sitzventil ausgebildet und dient zur Steuerung von über die Anschlüsse 1, 2 und 3 zu- bzw. abgeführten Fluidströmen. In einem Ventilgehäuse 4 ist dazu ein Schließorgan 5 axial verschieblich geführt, welches über eine aufgepresste Ankerplatte 6 betätigbar ist. Die Ankerplatte 6 ist Teil eines Topfmagneten 7, der in einem Magnetgehäuse 8 eine Spule 9 auf einem Polkern 10 trägt. Die Spule 9 ist über elektrische Anschlüsse 11 nach außen kontaktiert, wobei die Durchgangsöffnungen 12 im einstückig mit dem Magnetgehäuse 8 ausgeführten Deckel 13 jeweils einen O-Ring 14 zur unmittelbaren Abdichtung der mittels eines Isolators 15 gegen den Deckel 13 elektrisch isolierten Anschlüsse aufweisen

Das Schließorgan 5 ist hier beidseitig mit kegeligen Dichtflächen 16 versehen, welche auf der einen Seite mit einem eingesetzten Ventilsitz 17 und auf der anderen Seite mit einem gehäuseseitigen Ventilsitz 18 zusammenwirken - es ist aus der Darstellung zu ersehen, dass für den Wechsel von der Anlage an einem der Ventilsitze zur Anlage am anderen Ventilsitz nur ein sehr geringer Ventilhub erforderlich ist, was also einer sehr geringen Bewegung der Ankerplatte 6 in axialer Richtung des Schließorgans 5 entspricht. Der Spalt zwischen Ankerplatte 6 und unterer Stirnfläche des Polkerns 10 muss auf alle Fälle so groß sein, dass dieser Hub zwischen der Anlage der Dichtflächen 16 des Schließorgans 5 an den beiden Ventilsitzen 17,18 ungehindert erfolgen kann. Auf diese Weise wird der Anschluss 1 wahlweise, je nach Stellung des Schließorgans 5, mit dem Anschluss 2 oder dem Anschluss 3 verbunden.

Die Ankerplatte 6 bzw. das Schließorgan 5 ist über einen Verbindungskanal 19 im Schließorgan 5 druckkompensiert, womit der Spulenraum 20 druckbeaufschlagt ist. Dieser ist über die O-Ringe 14 an den Anschlüssen 11 nach außen druckdicht ausgeführt. Damit kann auch bei hohen zu schaltenden Drücken, wie beispielsweise in der Hochdruckhydraulik, mit sehr geringen Magnetkräften das Auslangen gefunden werden, was kleinbauende Aktuatoren bzw. insgesamt kleine Ventile ermöglicht.

Nur der Vollständigkeit halber ist hier auf die in einer unteren Ausdrehung des Polkerns 10 eingesetzte Spiralfeder 21 zu verweisen, die die Ankerplatte 6 bzw. das Schließorgan 5 im stromlosen Zustand in der dargestellten unteren Schaltstellung des Ventils hält. Das Magnetgehäuse 8 ist am Ventilgehäuse 4 durch zumindest bereichsweises Einpressen in eine umlaufende Nut 22 fixierbar und wird dann zusammen mit dem Ventilgehäuse 4 mittels eines Flansches 23 und darin eingesetzter Schrauben 24 an einem hier nicht weiter dargestellten Bauteil befestigt, welches mit den Anschlüssen 1, 2 und 3 kommunizierende Steueröffnung aufweist. Zur Abdichtung zwischen Ventilgehäuse und Magnetgehäuse ist eine weitere O-Ring-Dichtung 25 vorgesehen - die Abdichtung des Schließorgans 5 im Ventilgehäuse erfolgt über eine Ringdichtung 26.

Abgesehen von der dargestellten einstückigen Ausbildung des Polkerns 10 mit dem Deckel 13 bzw. Magnetgehäuse 8 könnte der Polkern 10 auch auf einfach vorstellbare Weise in eine zentrale Öffnung des Deckels 13 axial verstellbar eingepresst werden, was den Ausgleich von Montage- und Herstellungstoleranzen bzw. die Einstellung der Hubgeometrie vereinfacht. Das Schließorgan 5 ist hier in axialer Richtung einstellbar in eine zentrale Öffnung der Ankerplatte 6 eingepresst, was ebenfalls für die Sicherstellung der erforderlichen Hubfreiheiten eine einfache Einstellmöglichkeit bei der Herstellung bzw. Montage bietet.

## Patentansprüche

1. Ventil zur Steuerung eines Fluids, mit einem elektromagnetischen, nach Art eines Topfmagneten (7) aufgebauten, Aktuator sowie einer vom Aktuator betätigbaren Ankerplatte (6), welche ein mit einem Ventilsitz (17,18) zusammenwirkendes Schließorgan (5) aufweist und über einen Verbindungskanal (19) im Schließorgan (5) druckkompensiert ist, wobei der damit druckbeaufschlagte Spulenraum (20) des Aktuators nach außen druckdicht ausgeführt ist, wobei das den Spulenraum (20) umgebende Magnetgehäuse (8) auf der der Ankerplatte (6) gegenüberliegenden Seite einstückig mit einem lediglich die druckdicht abgedichtete(n) Durchgangsöffnung(en) (12) für die elektrischen Anschlüsse (11) der Spule (9) des Topfmagneten (7) aufweisenden Deckel (13) abgeschlossen ist.

2. Ventil nach Anspruch 1, **dadurch gekennzeichnet, dass** die/jede Durchgangsöffnung (12) im Deckel (13) einen Dichtring, vorzugsweise O-Ring (14), zur unmittelbaren Abdichtung der mittels eines Isolators (15) gegen den Deckel (13) elektrisch isolierten Anschlüsse (11) aufweist.

3. Ventil nach Anspruch 1 oder 2, **dadurch gekennzeichnet, dass** der die Spule (9) des Topfmagneten (7) tragende Polkern (10) in axialer Richtung in eine zentrale Aufnahme im Deckel (13) eingepresst ist.

4. Ventil nach einem der Ansprüche 1 bis 3, **dadurch gekennzeichnet, dass** das Schließorgan (5) in axialer Richtung in eine zentrale Öffnung der Ankerplatte (6) eingepresst ist.

## Claims

1. Valve for controlling a fluid, having an electromagnetic actuator, which is in the form of a pot-type magnet (7), and having an armature plate (6) which can be operated by the actuator, has a closing member (5) which interacts with a valve seat (17, 18), and is provided with pressure compensation via a connecting channel (19) in the closing member (5), with the coil area (20), which is pressurized in this way, of the actuator being designed to be externally pressure-tight, and with the magnet housing (8) which surrounds the coil area (20) being integrally closed on the side opposite the armature plate (6) by a cover (13) which has only the aperture opening or openings (12), which is or are sealed to be pressure tight, for the electrical connections (11) of the coil (9) of the pot-type magnet (7).

2. Valve according to Claim 1, **characterized in that** the/each aperture opening (12) in the cover (13) has a sealing ring, preferably an 0-ring (14), for direct sealing of the connections (11), which are electrically insulated from the cover (13) by means of an insulator (15).

3. Valve according to Claim 1 or 2, **characterized in that** the pole core (10) to which the coil (9) of the pot-type magnet (7) is fitted is pressed in the axial direction into a central receptacle in the cover (13).

4. Valve according to one of Claims 1 to 3, **characterized in that** the closing member (5) is pressed in the axial direction into a central opening in the armature plate (6).

## Revendications

1. Vanne destinée à contrôler un fluide, munie d'un actionneur électromagnétique qui se présente sous la forme d'un électroaimant cuirassé (7), et munie d'une plaque (6) d'armature qui peut être actionnée par l'actionneur, est dotée d'un organe (5) de fermeture interagissant avec un siège (17, 18) de soupape, et est pourvue d'une compensation de pression via un conduit (19) de liaison dans l'organe (5) de fermeture, la zone (20) de bobine ainsi pressurisée de l'actionneur étant conçue pour être extérieurement étanche sous pression, et le boîtier (8) d'aimant qui entoure la zone (20) de bobine étant fermé de façon intégrée du côté opposé à la plaque (6) d'armature par un couvercle (13) ne comportant que la ou les ouvertures (12) sous forme d'orifice(s), scellée(s) de façon étanche sous pression, pour les connexions électriques (11) de la bobine (9) de l'électroaimant cuirassé (7).

2. Vanne selon la revendication 1, **caractérisée en ce que** l'ouverture / chaque ouverture (12) sous forme d'orifice dans le couvercle (13) est munie d'une bague d'étanchéité, de préférence un joint torique (14), servant au scellage direct des connexions (11), qui sont isolées électriquement du couvercle (13) au moyen d'un isolateur (15).

3. Vanne selon la revendication 1 ou 2, **caractérisée en ce que** le noyau magnétique (10) sur lequel est ajustée la bobine (9) de l'électroaimant cuirassé (7) est pressé dans la direction axiale dans un réceptacle central du couvercle (13).

4. Vanne selon l'une des revendications 1 à 3, **caractérisée en ce que** l'organe (5) de fermeture est pressé dans la direction axiale dans une ouverture centrale de la plaque (6) d'armature.
